# EUROPEAN PATENT APPLICATION

(11) **EP 2 182 439 A1**
(43) Date of publication of application: **05.05.2010**
(21) Application number: 08305743.0
(22) Date of filing: 28.10.2008
(51) Int. Cl.: G06F 9/46

(54) **Method of managing data sent over the air to an applet having a restricted interface**

(71) Applicant: Gemalto SA, 92190 Meudon (FR)
(72) Inventor: Amiel, Patrice, 13290, AIX-LES-MILLES (FR); Valles, Grégory, 13011, MARSEILLE (FR); Poujol, Stéphane, 13600, LA CIOTAT (FR); Therene, Eric, 13720, LA BOUILLADISSE (FR)

(57) **Abstract**

The invention is a method of managing data sent Over The Air by a server to a portable electronic device which comprises a targeted applet. The method comprises the steps of:
- sending an OTA script to the portable electronic device, said OTA script comprising selection data, session data and applicative data,
- extracting the selection data by a session manager embedded in the portable electronic device,
- selecting the targeted applet by using the selection data, said selecting step being carried out by the session manager (SM),
- extracting the session data by the session manager,
- establishing a secured session with the targeted applet, said secured session being established by the session manager by using the session data,
- extracting the applicative data by the session manager,
- sending the applicative data to the targeted applet, said applicative data being sent in the form of APDU format.

## Description

### (Field of the invention)

The present invention relates to methods of managing data sent over the air to an applet having a restricted interface. It relates particularly to methods of sending data to applets which are reachable through a limited number of protocols only. In particular, the present invention is well suited for sending data to applets embedded in a portable electronic device like smart cards.

### (Prior art)

A portable electronic device such as a smart card may contain applications in the form of applets. These applets may be accessed by a remote server via an over the air channel, known as OTA. OTA mechanism is defined by the ETSI SCP 102.225 and ETSI-SCP 102.226 standards. The OTA channel allows accessing data and applications which have been specifically developed for SIM cards. Only smart cards intended to be used in Telecom domain are able to manage an OTA communication. In particular SIM cards offer OTA features. On the contrary smart cards intended to be used in domain such as Banking, Loyalty, or Security access do not offer OTA features. These smart cards may be accessed through an I/O communication channel in contact mode or in contactless mode. In this case, data is sent in the form of APDU format on such an interface communication. APDU stands for Application Protocol Data Unit in accordance with the ISO 7816-4 standard. Applets developed for these smart cards are designed with an Application Programming Interface (API) dedicated to I/O communication. In other words, such applets are able to process incoming and outgoing data in the form of APDU format only.

Due to the market trend, several applications belonging to different domains may be integrated in a unique smart card. In particular, applets designed for I/O communication may be integrated in smart cards designed for the Telecom domain. When applets designed for I/O communication are already validated and approved by certification audits, these applets must be kept unchanged. Thus it is not possible to update these applets to add an API able to manage data according to OTA format.

The OTA communication must follow specific rules which are different from rules of I/O communication.

There is a need to be able to remotely access to applets designed for I/O communication in smart cards designed for the Telecom domain. In particular a distant server must be able to communicate with such an applet via an OTA session in order to personalize the applet or to use a service provided by the applet.

### (Summary of the Invention)

An object of the invention is to solve the above mentioned technical problem.

The object of the present invention is a method of managing data sent Over The Air by a server to a portable electronic device which comprises a targeted applet. The method comprises the step of sending an OTA script from the server to the portable electronic device, said OTA script comprising selection data, session data and applicative data. The method comprises the step of extracting the selection data from the OTA script, said selection data being extracted by a session manager embedded in the portable electronic device. The method comprises the step of selecting the targeted applet by using the selection data, said selecting step being carried out by the session manager. The method comprises the step of extracting the session data from the OTA script, said session data being extracted by the session manager. The method comprises the step of establishing a secured session with the targeted applet, said secured session being established by the session manager by using the session data. The method comprises the step of extracting the applicative data from the OTA script, said applicative data being extracted by the session manager. The method comprises the step of sending the applicative data to the targeted applet, said applicative data being sent in the form of APDU format.

The method may comprise the further step of sending a second OTA script from the server to the portable electronic device, said second OTA script comprising additional data intended to be transmitted to the targeted applet. The method may comprise the further step of extracting the additional data from the second OTA script, said additional data being extracted by the session manager. The method may comprise the further step of sending the additional data to the targeted applet through said secured session.

Advantageously, the method may comprise the further step of unselecting the targeted applet when a preset event occurs, said unselecting step being carried out by the session manager.

In a preferred embodiment the portable electronic device may be of smart card type.

Advantageously, the secured session may be of SCP02 type or of Calypso ® type.

The portable electronic device may comprise a security domain and the method may comprise the further step of requesting the security domain to open a second secured session between the server and the session manager, said requesting step being performed by the session manager.

The session manager and the security domain may be merged in a single entity.

Advantageously, the method may comprise the further step of deciphering a part or totality of said applicative data according to parameters of the second secured session and a further step of ciphering a part or totality of said applicative data according to parameters of the secured session established with the targeted applet.

In a preferred embodiment, the OTA script may contain data intended to personalize the targeted applet.

Advantageously, the method may comprise the further step of generating the OTA script from a personalization script intended to be sent through a I/O contact interface.

Another object of the invention is a portable electronic device intended to be connected to a mobile terminal. The portable electronic device is intended to receive an OTA script from a server wherein the OTA script comprises selection data, session data and applicative data. The portable electronic device comprises a microprocessor, a communication interface, an operating system, a working memory and a first non volatile memory. The portable electronic device is intended to comprise a targeted applet and comprises a session manager able to extract said selection data, said session data and said applicative data from the OTA script. The session manager is capable of selecting the targeted applet by using the selection data. The session manager is capable of establishing a secured session with the targeted applet by using the session data. The session manager is capable of sending the applicative data to the targeted applet in the form of APDU format.

Advantageously, the portable electronic device may be intended to receive a second OTA script from said server. The second OTA script may comprise additional data intended to be transmitted to the targeted applet. The session manager may be capable of extracting the additional data from the second OTA script. The session manager may be capable of sending the additional data to the targeted applet through said secured session.

The portable electronic device may comprise a security domain and the session manager may be capable of requesting said security domain to open a second secured session between the server and the session manager.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a portable electronic device and an example of communication exchanges between a server and the portable electronic device according to the invention;
- Figure 2 is an example of step sequence for sending applicative data to an applet embedded in a SIM smart card according to the invention;
- Figure 3 is an example of step sequence for sending applicative data to a Calypso ® applet embedded in a SIM smart card according to the invention; and
- Figure 4 is an example of step sequence for sending a personalization script to an applet embedded in a SIM smart card according to the invention.

### (Detailed description of the preferred embodiments)

The invention may apply to any types of portable electronic devices able to manage an OTA session. In this specification, the portable electronic device is a SIM card but it could be any other kind of portable electronic device offering Telecom smart card features and intended to be connected to a telecom terminal.

The present invention relies on an element dedicated to the communication between an OTA server and an applet embedded in the portable electronic device. This element is named session manager. The session manager manages OTA constraints and adapts incoming and outgoing data to match the applet communication interface requirements. Thanks to the invention, the OTA server always uses the standard OTA mechanism and remains fully independent of interface constraints of the targeted application. The session manager manages issues and data formatting for the targeted application. From the targeted application point of view, the communication is identical whatever the used communication mode is. The applet remains independent of the transport format between the server and the portable electronic device.

An advantage of the invention is to avoid the upgrade of the used telecom terminal. Such an upgrade is heavy to manage and costly since the number of telecom terminals on the field is huge. Moreover there are many different kinds of mobile handsets already deployed.

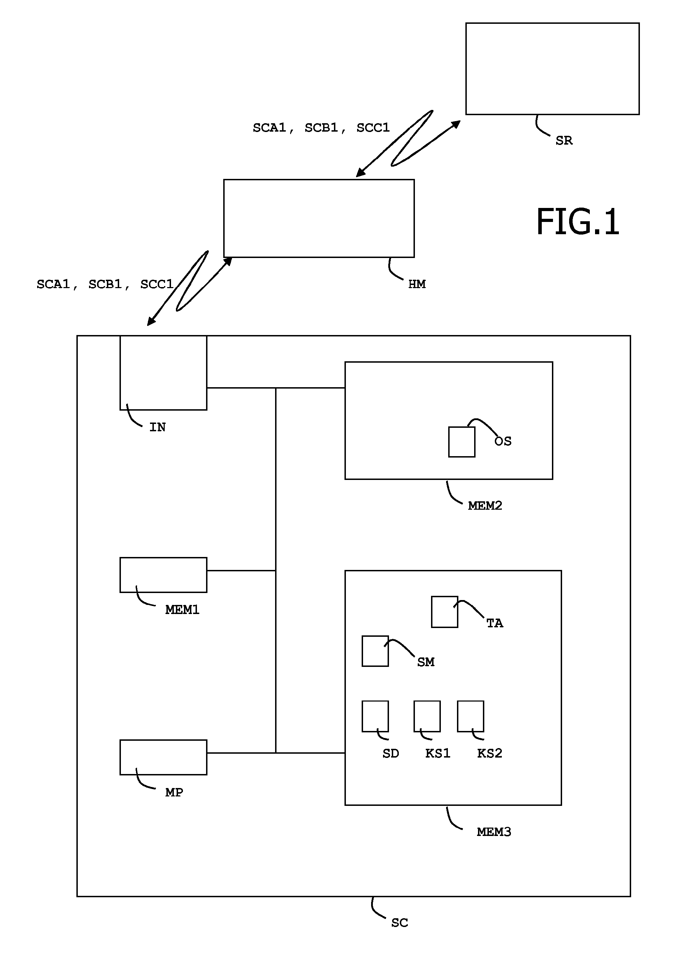

**Figure 1** shows the architecture of a portable electronic device SC of SIM card type according to a preferred embodiment of the invention.

The portable electronic device SC comprises a working memory MEM1 of RAM type, two non volatile memories MEM2 and MEM3, a microprocessor MP and a communication interface IN. The non volatile memory MEM2 comprises an operating system OS.

The non volatile memory MEM3 comprises a targeted applet TA, a session manager SM, a security domain SD and two key sets KS1 and KS2.

The two memories MEM2 and MEM3 may be implemented as any combinations of one, two or more memories. These memories may be NAND flash or EEPROM memory or another type of non volatile memory.

The SIM card SC is intended to exchange messages with a telecom handset HM through the communication interface IN. The telecom handset HM is intended to exchange messages with a distant server SR via the OTA mechanism.

The session manager SM may be implemented as an applet in a Java Card. Thus the OTA scripts are addressed to the session manager applet. Contrary to prior art, the OTA scripts are neither addressed to the targeted applet AT, nor addressed to the security domain SD. At reception of an OTA script, the session manager SM is able to select the targeted applet TA, to establish a secure session with TA and to send applicative data to the targeted applet through APDU format. Data returned by the targeted applet are adapted by the session manager SM and sent back to the server SR. The session manager SM is able to keep a secure session opened when waiting for a next OTA script.

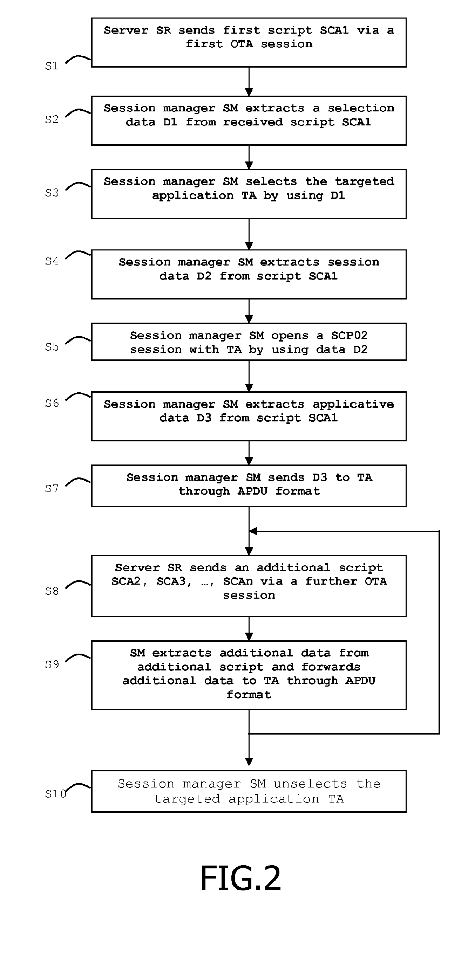

**Figure 2** shows an example of a step sequence for sending applicative data to an applet embedded in a SIM smart card according to the invention. In this example, the applet TA has been designed in order to comply with GlobalPlatform ® v2.x requirements. In particular, a secure channel of SCP02 type must be opened and used for exchanging data with the applet TA.

First the server SR sends a first script SCA1 to the SIM card SC via OTA at step S1. The script SCA1 complies with OTA format. The script is received by the mobile phone HM and forwarded to the SIM card. Then the operating system OS of the SIM card SC provide the session manager SM with the received script SCA1.

At step S2, the session manager SM gets a selection data D1 from the script SCA1. The selection data D1 contains the AID of the targeted applet TA. Then the session manager SM selects the targeted applet TA by sending a Select command to the applet TA with the relevant AID as parameter at step S3. The Select command is sent through the APDU format to the targeted applet TA. That is to say the Select command is sent on the form of a command header plus a command body. The command header contains four bytes: CLA, INS P1 and P2. The command body contains a variable number of bytes depending of the command parameter. The two status words SW1, SW2 are sent back to the session manager SM which checks that the selection is successful. If a problem is detected thanks to SW1 and SW2, then the session manager sends an error message to the server SR. Such an error message may indicate that the targeted application has not been found.

At step S4, the session manager SM gets a session data D2 from the script SCA1. The session data D2 corresponds to the couple of Initialize Update command and External Authentication command. Then the session manager SM opens a secure session of SCP02 type by sending data corresponding to the Initialize Update command and to the External Authentication command to the targeted applet TA at step S5. Both commands are sent through the APDU format to the targeted applet TA.

At step S6, the session manager SM gets an applicative data D3 from the script SCA1. The applicative data D3 corresponds to one or several commands intended to be transmitted to the targeted applet TA. For example, applicative data D3 may be one or several commands intended to personalize an applet or one or several Store data commands. Then the session manager SM sends the applicative data D3 to the targeted applet TA at step S7.

Alternatively, the session manager SM may extract the applicative data D3 in several operations and send the corresponding part of D3 to the targeted applet through a plurality of APDU commands.

At the end of step S7, all the content of the script SCA1 has been treated by the session manager SM and the secure session SCP02 remains alive between the targeted applet TA and the session manager SM.

Alternatively the session manager SM may extract any combination of D1, D2 and D3 in a single operation.

Alternatively the session manager SM may open a secure session of SCP02 type and send applicative data in a single operation.

If the server SR sends a second OTA script SCA2 to the SIM card SC via OTA at step S8, a new OTA session will be opened between the server and the session manager SM. At this time the targeted applet TA is still selected and the previous secure session SCP02 is still opened between the targeted applet TA and the session manager SM. Then at step S9, the session manager SM gets additional data from the script SCA2 and sends this additional data to the targeted applet TA. Additional data is sent through APDU commands to the targeted applet TA.

Before sending the additional data, the session manager may check if the content of the script SCA2 is intended to be sent to the targeted applet TA in the current SCP02 secure session.

Advantageously, the session manager SM may unselect the targeted applet TA at step S10. The unselecting step may be triggered when a preset event occurs. For example the last OTA script may contain a "end-of script" indicator. The unselecting step may also be triggered when the following sequence occurs: start of a new SCP02 session, error in a script then script sent for another application. The unselecting step of the targeted applet TA may be important especially if the targeted applet is not multiselectable.

An advantage of the invention is to avoid the automatic end of the SCP02 secure session when a further OTA session is opened between the remote server SR and the session manager SM. Thus the invention allows sending one SCP02 script through a plurality of OTA scripts SCA1, SCA2, ..., SCAn since the applicative session is kept opened over several OTA sessions. Since the invention allows sending a large amount of data to a targeted applet, large files of USIM or UICC systems may be securely loaded through a set of OTA scripts.

An advantage of the invention is to allow exchanging an amount of data which is bigger than the maximum size that can be exchanged via a single OTA session. The invention offers the same advantage when using the Card Application Toolkit - Transport Protocol also named CAT-TP.

Thanks to the invention, applets that are not initially designed for Telecom business may be personalized by using the same APDU script as in I/O contact mode.

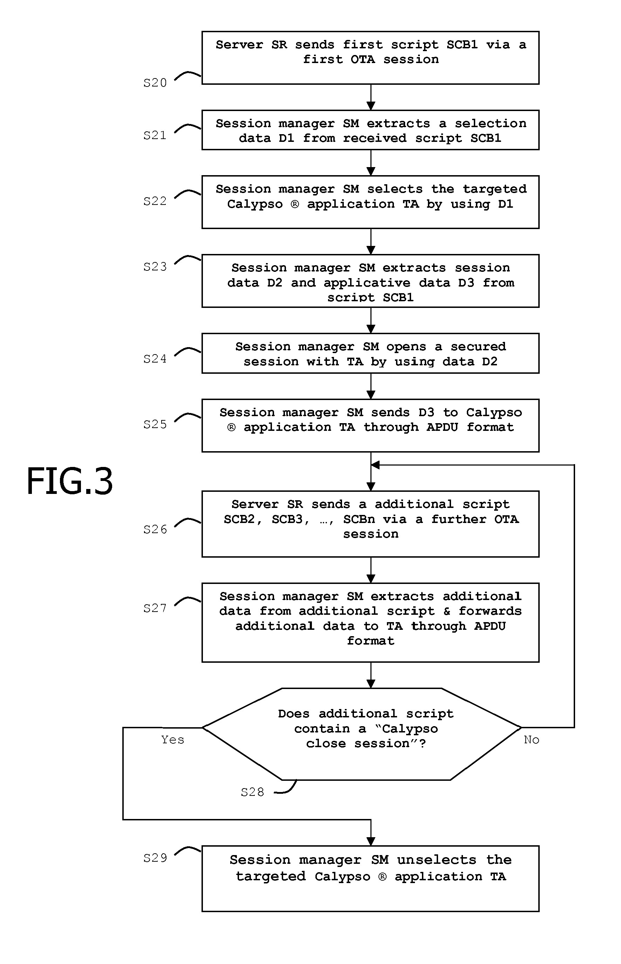

**Figure 3** shows another example of a step sequence for sending applicative data to an applet embedded in a SIM smart card according to the invention. In this example, the applet TA has been designed in order to comply with Calypso ® v2.4 requirements. In particular, a specific secure channel must be opened and used for exchanging data with the applet TA.

First the server SR sends a first script SCB1 to the SIM card SC via OTA at step S20. The script SCB1 complies with OTA format. The script SCB1 is received by the handset terminal HM and forwarded to the SIM card. Then the operating system OS of the SIM card SC provides the session manager SM with the received script SCB1.

At step S21, the session manager SM gets a selection data D1 from the script SCA1. The selection data D1 corresponds to the AID of the targeted applet TA. Then the session manager SM selects the targeted applet TA by sending a Select command to the applet TA with the relevant AID as parameter at step S22. The Select command is sent through the APDU format to the targeted applet TA.

At step S23, the session manager SM gets both a session data D2 and an applicative data D3 from the script SCB1. The session data D2 corresponds to the "Open session" command. Then the session manager SM opens a specific secure session by sending the "Open session" command to the targeted applet TA at step S24. This command is sent through the APDU format to the targeted applet TA.

The applicative data D3 corresponds to one or several commands intended to be transmitted to the targeted applet TA. For example, applicative data D3 may be a proprietary APDU command dedicated to the Calypso application personalization. Then the session manager SM sends the applicative data D3 to the targeted applet TA at step S25.

Alternatively, the session manager SM may extract the session data D2 and the applicative data D3 in several operations.

Alternatively, the session manager SM may extract part of the applicative data D3 in several operations and send the corresponding parts of D3 to the targeted applet through a plurality of APDU commands.

At the end of step S25, all the content of the script SCB1 has been treated by the session manager SM and the specific secure session remains alive between the Calypso ® applet TA and the session manager SM.

Alternatively the session manager SM may extract any combination of D1, D2 and D3 in a single operation.

If the server SR sends a second OTA script SCB2 to the SIM card SC via OTA at step S26, a new OTA session will be opened between the server and the session manager SM. At this time the targeted applet TA is still selected and the previous specific secure session is still opened between the targeted applet TA and the session manager SM. Then at step S27, the session manager SM gets additional data from the script SCB2 and sends this additional data to the targeted applet TA. Additional data is sent through one or several APDU commands to the targeted applet TA.

Advantageously, the session manager SM may seek a "Close session" command in the received OTA script at step S28. If the received OTA script contains a "Close session" command, the session manager SM may unselect the targeted applet TA at step S29.

An advantage of the invention is to avoid the automatic end of the specific secure session when a further OTA session is opened between the remote server SR and the session manager SM. Thus the invention allows sending one Calypso ® script through a plurality of OTA scripts SCB1, SCB2,..., SCBn since the applicative session is kept opened over several OTA sessions. This point is particularly interesting since the amount of data to be sent to the Calypso ® applet is not known at the beginning of the personalization process. The data required for the Calypso ® personalization process is determined during the personalization process itself. For example, in response to the sending of applicative data D3 at step S25, the targeted applet TA may send back data which are forwarded to the server SR. Then the server SR may use the forwarded data for generating the second OTA script SCB2. In this case the content and size of the second OTA script SCB2 is dynamically computed during the transaction process.

Thanks to the invention, a dynamic amount of data may be securely sent to a targeted applet embedded in a smart card.

An advantage of the invention is to allow secure data exchanges by using a specific security layer between the OTA server and the targeted applet.

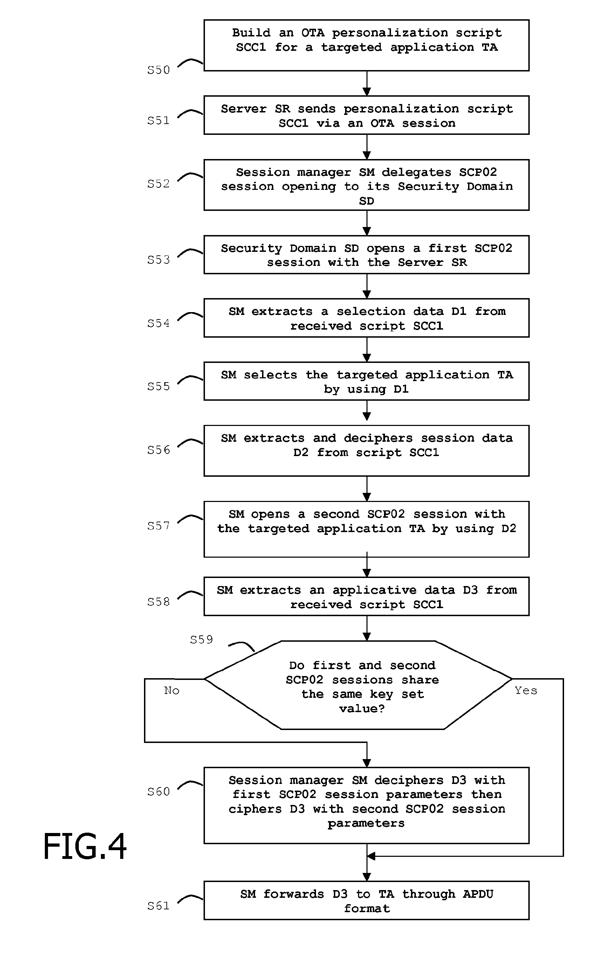

**Figure 4** shows an example of a step sequence for sending a personalization script to an applet embedded in a SIM smart card according to the invention. In this example, the targeted applet TA has been designed in order to comply with GlobalPlatform ® v2.x requirements. Thus, a secure channel of SCP02 type must be opened and used for exchanging data with the targeted applet TA.

An initial SCP02 personalization script is assumed to be already developed. At the first step S50, an OTA personalization script SCC1 is generated on the base of the initial SCP02 personalization script. The OTA script SCC1 keeps the SCP02 security layer unchanged. In addition, the OTA script SCC1 uses the SCP80 security mechanism as defined by ETSI 102.225 standard. The OTA script SCC1 is built with the usual structure of script compliant with OTA requirements. A usual OTA script is intended to target a Security domain. A usual OTA script contains the following commands in a predefined order: Initialize Update command, External Authenticate command, Install [For Perso] command, and at least one Store Data command.

The server SR sends the OTA script SCC1 to the SIM card SC via OTA at step S51. The script SCC1 complies with OTA format. The script is received by the Telecom handset HM and forwarded to the SIM card. Then the operating system OS of the SIM card SC provides the session manager SM with the received script SCC1.

At step S52, the session manager SM delegates the opening of the SCP02 session to the Security Domain SD.

The Security Domain SD opens a first SCP02 session with the server SR at step S53. Thus a first SCP02 session is available between the server SR and the session manager SM.

In a preferred embodiment, the session manager SM and the targeted applet TA are located in the same Security Domain SD. Thus the session manager SM is able to find the relevant key set KS1 used by the OTA server SR for the OTA script generation.

Then the session manager SM gets a selection data D1 from the script SCC1 at step S54. In this example, the selection data D1 corresponds to the Install [For Perso] command. Since the SCP02 session is opened, the session manager SM is able to decipher the Install [For Perso] command and to get the AID of the targeted applet TA. Then the session manager SM selects the targeted applet TA by sending a Select command to the applet TA with the relevant AID at step S55. The Select command is sent through the APDU format to the targeted applet TA.

At that stage, it is required to open a new SCP02 channel on the targeted applet. However, it is not possible to reuse the key and the Initialize Update and External Authenticate commands received by OTA because the SCP02 session key will be different. This is due to the fact that either the random generated by the card will be different, or in case of SCP02 mode "55", the synchronization counter of the SCP02 key set KS1 has already been incremented during the opening of the first SCP02 session. It is then required to use another SCP02 key set KS2 which is dedicated to the second SCP02 session.

At step S56, the session manager SM gets a session data D2 from the script SCC1. The session data D2 corresponds to the couple of Initialize Update command and External Authentication command. Then the session manager SM opens a second secure session of SCP02 type by sending the Initial Update command and the External Authentication command to the targeted applet TA at step S57. Both commands are sent through the APDU format to the targeted applet TA. Thus a second SCP02 session is available between the targeted applet TA and the session manager SM.

At step S58, the session manager SM gets an applicative data D3 from the script SCC1. The applicative data D3 corresponds to one or several commands intended to be transmitted to the targeted applet TA. For example, applicative data D3 may be a Store data command.

Thanks to first and second SCP02 sessions, data may be securely exchanged between the server SR and the targeted applet TA. The session manager SM is in charge of forwarding data between the two SCP02 sessions.

At step S59, the session manager SM checks if first and second SCP02 sessions have key sets sharing a same value.

If first and second SCP02 sessions have different key set value, then the session manager SM deciphers the data D3 by using the key set KS1 corresponding to the first SCP02 session at step S60. Then the session manager SM ciphers the data D3 by using the key set KS2 corresponding to the second SCP02 session.

Then the session manager SM sends the applicative data D3 to the targeted applet TA at step S61.

If first and second SCP02 sessions share a same key set value, then the session manager SM directly sends the applicative data D3 to the targeted applet TA at step S61. This case may occur when the mode "55" of SCP02 is used. The synchronization counter of the SCP02 key set is used instead of a random. It is then possible to have exactly the same key values for both key sets KS1 and KS2. In order to synchronize counters of both key sets KS1 and KS2, each time a SCP02 session is opened with KS1, a SCP02 session must be opened with KS2.

Alternatively, the session manager SM may extract the applicative data D3 in several operations and send the corresponding part of D3 to the targeted applet through a plurality of APDU commands.

Alternatively the session manager SM may extract any combination of D2 and D3 in a single operation.

At the end of step S61, all the content of the script SCC1 has been treated by the session manager SM and the second secure session SCP02 remains alive between the targeted applet TA and the session manager SM.

If the server SR sends a second OTA script, a new OTA session will be opened between the server and the session manager SM thanks to the security domain SD. At this time the targeted applet TA is still selected and the second secure session SCP02 is still opened between the targeted applet TA and the session manager SM. Then the session manager SM may get additional data from the second OTA script, modify the additional data if required and sends this additional data to the targeted applet TA through APDU format.

Advantageously, there is one instance of the session manager applet per applet to be targeted on the smart card.

Alternatively, there is one instance of the session manager applet per security domain on the smart card.

At the end of the process, the targeted applet TA has received a personalization script compliant with I/O contact format. In the above-described example, the Install [For Perso] command has been removed from the script part sent to targeted applet TA. Moreover, data have been sent to the targeted applet TA according to an order different from the data order into the OTA script.

An advantage of the invention is to allow the sending via OTA channel of an initial personalization script designed to be sent in I/O mode. Thanks to the invention, the initial security layer may be kept unchanged for the initial personalization script. In the above-described example, the SCP02 security layer has been fully used between the server SR and the targeted applet TA.

Advantageously, the session manager SM may transform data received through an OTA script into APDU commands having a non-standard header value. In other words, the session manager SM may transform data into APDU commands which comply with the ISO-7816 APDU header structure and which have non-standard CLA, INS, P1 or P2 values. Thanks to this feature, data may be sent to the targeted applet according to a proprietary APDU format.

## Claims

1. A method of managing data sent Over The Air by a server (SR) to a portable electronic device (SC), said portable electronic device (SC) comprising a targeted applet (TA), said method comprising the step of:
a) sending (S1, S20, S51) an OTA script (SCA1, SCB1, SCC1) from the server (SR) to the portable electronic device (SC), said OTA script (SCA1, SCB1, SCC1) comprising selection data (D1), session data (D2) and applicative data (D3),
**characterized in that** said method comprises the steps of:
b) extracting (S2, S21, S54) the selection data (D1) from the OTA script (SCA1, SCB1, SCC1), said selection data (D1) being extracted by a session manager (SM) embedded in the portable electronic device (SC),
c) selecting (S3, S22, S55) the targeted applet (TA) by using the selection data (D1), said selecting step (S3, S22, S55) being carried out by the session manager (SM),
d) extracting (S4, S23, S56) the session data (D2) from the OTA script (SCA1, SCB1, SCB1), said session data (D2) being extracted by the session manager (SM),
e) establishing (S5, S24, S57) a secured session with the targeted applet (TA), said secured session being established by the session manager (SM) by using the session data (D2),
f) extracting (S6, 23, 58) the applicative data (D3) from the OTA script (SCA1, SCB1, SCB1), said applicative data (D3) being extracted by the session manager (SM),
g) sending (S7, 25, S61) the applicative data (D3) to the targeted applet (TA), said applicative data (D3) being sent in the form of APDU format.

2. A method according to claim 1, wherein said method comprises the further steps of:
h) sending (S8, S26) a second OTA script (SCA2, SCB2) from the server (SR) to the portable electronic device (SC), said second OTA script comprising additional data intended to be transmitted to said targeted applet (TA),
i) extracting (S9, S27) the additional data from the second OTA script (SCA2, SCB2), said additional data being extracted by the session manager (SM),
j) sending (S9, S27) the additional data to the targeted applet (TA) through said secured session.

3. A method according to one of claims 1 to 2, wherein said method comprises the further step of:
k) when a preset event occurs, unselecting (S10, S29) the targeted applet (TA), said unselecting step being carried out by the session manager (SM).

4. A method according to one of claims 1 to 3, wherein said portable electronic device (SC) is of smart card type.

5. A method according to one of claims 1 to 4, wherein said secured session is of SCP02 type.

6. A method according to one of claims 1 to 4, wherein said secured session is of Calypso ® type.

7. A method according to one of claims 1 to 4, wherein said portable electronic device (SC) comprises a security domain (SD) and wherein said method comprises the further step of:
1) requesting (S52) the security domain (SD) to open a second secured session between the server (SR) and the session manager (SM), said requesting step being performed by the session manager (SM).

8. A method according to claim 7, wherein said session manager (SM) and said security domain (SD) are merged in a single entity.

9. A method according to one of claims 7 to 8, wherein said method comprises the further steps of:
m) deciphering (S60) a part or totality of said applicative data (D3) according to parameters (KS1) of said second secured session,
n) ciphering (S60) a part or totality of said applicative data (D3) according to parameters (KS2) of the secured session established with the targeted applet (TA).

10. A method according to one of claims 7 to 9, wherein said OTA script (SCC1) contains data intended to personalize the targeted applet (TA).

11. A method according to claim 10, wherein said method comprises the further step of:
o) generating (S50) said OTA script (SCC1) from a personalization script intended to be sent through a I/O contact interface.

12. A portable electronic device (SC) intended to be connected to a mobile terminal (HM), said portable electronic device (SC) being intended to receive an OTA script (SCA1, SCB1, SCC1) from a server (SR), said OTA script (SCA1, SCB1, SCC1) comprising selection data (D1), session data (D2) and applicative data (D3), said portable electronic device (SC) comprising:
- a microprocessor (MP),
- a communication interface (IN),
- an operating system (OS),
- a working memory (MEM1) and a first non volatile memory (MEM2),
said portable electronic device (SC) being intended to comprise a targeted applet (TA),
**characterized in that** said portable electronic device (SC) comprises a session manager (SM) able to extract said selection data (D1), said session data (D2) and said applicative data (D3) from the OTA script (SCA1, SCB1, SCC1), said session manager (SM) being able to select the targeted applet (TA) by using the selection data (D1), said session manager (SM) being able to establish a secured session with the targeted applet (TA) by using the session data (D2), said session manager (SM) being able to send the applicative data (D3) to the targeted applet (TA) in the form of APDU format.

13. A portable electronic device (SC) according to claim 12, wherein said portable electronic device (SC) is intended to receive a second OTA script (SCA2, SCB2) from said server (SR), said second OTA script comprising additional data intended to be transmitted to said targeted applet (TA), wherein the session manager (SM) is able to extract the additional data from the second OTA script (SCA2, SCB2) and wherein the session manager (SM) is able to send the additional data to the targeted applet (TA) through said secured session.

14. A portable electronic device (SC) according to one of claims 12 or 13, wherein said portable electronic device (SC) is of smart card type.

15. A portable electronic device (SC) according to one of claims 12 to 14, wherein said portable electronic device (SC) comprises a security domain (SD) and wherein the session manager (SM) is able to request said security domain (SD) to open a second secured session between the server (SR) and the session manager (SM) .
